# FASCICULE DE BREVET EUROPEEN

(11) **EP 1 668 649 B1**
(45) Date de publication et mention de la délivrance du brevet: **27.07.2016**
(21) Numéro de dépôt: 04787416.9
(22) Date de dépôt: 22.09.2004
(51) Int. Cl.: G21C 3/32

(54) **ASSEMBLAGE DE COMBUSTIBLE NUCLEAIRE COMPRENANT UN DISPOSITIF MAILLE DE RENFORT ET UTILISATION D UN TEL DISPOSITIF DANS UN ASS EMBLAGE DE COMBUSTIBLE NUCLEAIRE**
KERNBRENNSTABBÜNDEL MIT EINER MASCHENARTIGEN VERSTEIFUNGSVORRICHTUNG UND EINSATZ EINER DERARTIGEN VORRICHTUNG IN EINEM KERNBRENNSATABBÜNDEL
NUCLEAR FUEL ASSEMBLY COMPRISING A REINFORCING MESH DEVICE AND USE OF ONE SUCH DEVICE IN A NUCLEAR FUEL ASSEMBLY

(30) Priorité: 30.09.2003 FR 0311459
(43) Date de publication de la demande: 14.06.2006
(73) Titulaire: AREVA NP, 92400 Courbevoie (FR)
(72) Inventeur: BEATI, Angelo, F-69003 LYON (FR); MULLER, Thierry, F-71390 STE HELENE (FR); RONDEPIERRE, Jean-François, F-69009 LYON (FR)
(74) Mandataire: Domenego, Bertrand
(86) Numéro de dépôt international: PCT/FR2004/002388
(87) Numéro de publication internationale: WO 2005/034136

(56) Documents cités:
- EP-A- 0 261 544
- EP-A- 0 516 542
- FR-A- 2 665 291
- "Fuel cartridge, for PWR reactor, has reinforcing part extending between support plates" DERWENT, 9 novembre 2001 (2001-11-09), XP002284466
- ANONYMOUS: 'THE WESTINGHOUSE PRESSURIZED WATER REACTOR NUCLEAR POWER PLANT' 01 Janvier 1984, pages 1 - 21, XP009187522

## Description

La présente invention concerne les assemblages de combustible nucléaire.

Elle s'applique, par exemple, aux assemblages pour réacteurs nucléaires à eau sous pression.

Généralement, les assemblages de combustible nucléaire comprennent des crayons de combustible nucléaire et un squelette de support ayant deux embouts, des tubes guides reliant les embouts, et des grilles de maintien des crayons.

Les grilles de maintien comprennent chacune deux jeux de plaquettes entrecroisées et une ceinture extérieure, délimitant ainsi des cellules traversées les unes par les tubes guides et les autres par les crayons de combustible. Les plaquettes sont munies de moyens de maintien des crayons aux noeuds d'un réseau sensiblement régulier et sont fixées à certains au moins des tubes guides.

L'une au moins des grilles de maintien assure de plus le supportage des crayons. Pour cela, elle est habituellement munie de ressorts, découpés dans les plaquettes ou rapportés sur les plaquettes, et destinés à plaquer les crayons sur des bossettes embouties dans les plaquettes et formant d'autres faces des cellules.

Les autres grilles n'ont qu'une fonction de maintien des crayons aux noeuds du réseau. Elles comportent pour cela, sur chaque face de chaque cellule traversée par un crayon, des bossettes d'appui du crayon.

On connaît également de FR-2 665 291 et EP-261 544 des grilles additionnelles de mélange destinées à être intercalées entre les grilles de maintien et comprenant des ailettes pour améliorer le mélange du fluide réfrigérant circulant aux travers des assemblages.

A l'issue de leur fabrication, de tels assemblages s'étendent de manière rectiligne et verticalement le long d'une direction dénommée axiale. Une fois placés en réacteur, ces assemblages se déforment du fait de l'irradiation et peuvent atteindre des formes en C, S ou W.

De telles déformations posent de nombreux problèmes. En fonctionnement, elles rendent plus difficile l'insertion des grappes de commande et d'arrêt dans les tubes guides.

En manutention, ces déformations augmentent les risques d'accrochage entre les assemblages, par exemple lors des opérations de chargement et de déchargement du coeur du réacteur.

Un but de l'invention est de résoudre ce problème en limitant la déformation des assemblages de combustible nucléaire sous irradiation.

A cet effet, l'invention a pour objet un assemblage de combustible selon la revendication 1.

Selon des modes particuliers de réalisation, l'assemblage peut comprendre l'une ou plusieurs des caractéristiques des revendications dépendantes 2 à 6.

L'invention a en outre pour objet une utilisation selon la revendication 7.

Selon des modes particuliers de réalisation l'utilisation peut comprendre l'une des caractéristiques des revendications 8 à 12.

L'invention sera mieux comprise à la lecture de la description qui va suivre, donnée uniquement à titre d'exemple, et faite en se référant aux dessins annexés, sur lesquels :
- la figure 1 est une vue schématique en élévation d'un assemblage de combustible nucléaire selon l'invention,
- la figure 2 est une vue schématique partielle et en perspective illustrant un dispositif intermédiaire de renfort de l'assemblage de la figure 1,
- la figure 3 est une vue schématique en plan comparant la structure et l'étendue du dispositif intermédiaire de renfort de la figure 2 par rapport au réseau de crayons de combustible nucléaire et à une grille de maintien de l'assemblage de la figure 1,
- la figure 4 est une vue schématique partielle et en coupe illustrant la liaison aux tubes guides d'une variante du dispositif intermédiaire de renfort de la figure 2,
- la figure 5 est un graphique comparant la rigidité d'un assemblage classique et de l'assemblage de la figure 1, avant irradiation,
- la figure 6 est une vue analogue à la figure 5, après irradiation, et
- la figure 7 est une vue analogue à la figure 3 illustrant une variante du dispositif intermédiaire de renfort de la figure 2.

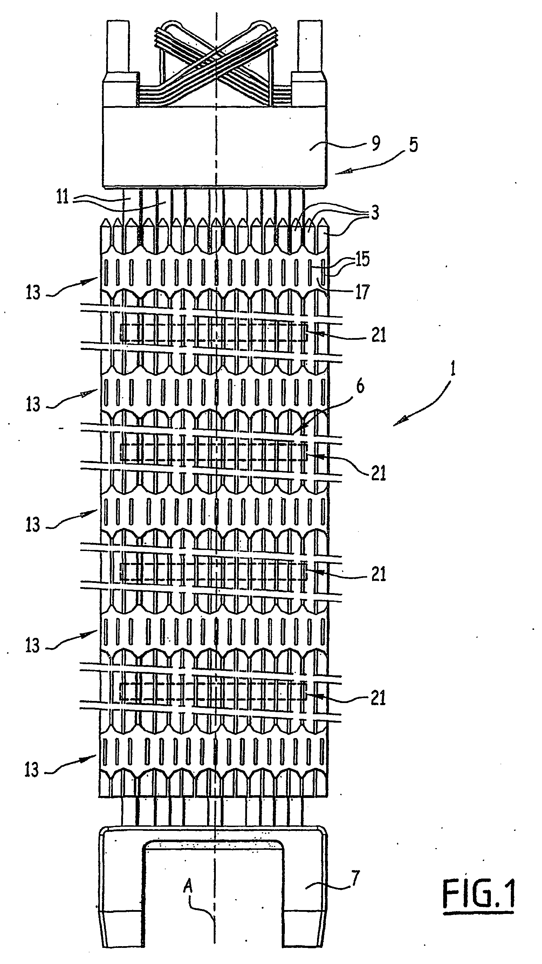

La figure 1 illustre schématiquement un assemblage 1 de combustible nucléaire pour réacteur à eau sous pression. L'assemblage 1 s'étend verticalement et de manière rectiligne le long d'une direction longitudinale A.

L'assemblage 1 comprend principalement des crayons 3 de combustible nucléaire et une structure ou squelette 5 de support des crayons 3.

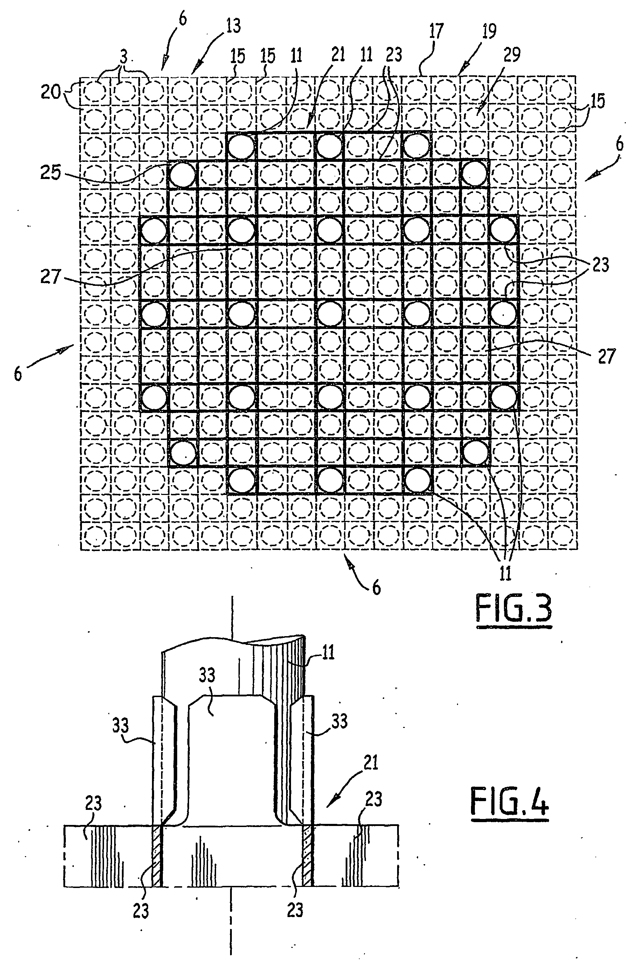

De manière classique, les crayons 3 s'étendent verticalement et sont disposés en un réseau sensiblement régulier à base carrée, comme on le voit sur la figure 3 où les crayons 3 sont représentés en pointillés.

Dans l'exemple représenté, l'assemblage 1 comprend un groupe de 264 crayons 3 et le réseau forme, en vue de dessus, un carré de 17 crayons de côté. Le groupe de crayons 3 possède donc quatre faces latérales 6 de 17 crayons chacune.

Le squelette de support 5 comprend classiquement :
- un embout inférieur 7 et un embout supérieur 9,
- des tubes guides 11 destinés à recevoir les crayons d'une grappe de commande ou d'arrêt non-représentée, et
- des grilles 13 de maintien des crayons 3 aux noeuds du réseau.

Les embouts 7 et 9 sont fixés aux extrémités longitudinales des tubes guides 11.

Comme on peut le voir sur la figure 3 où une grille de maintien 13 est représentée en pointillés, chaque grille de maintien 13 comprend par exemple deux jeux de plaquettes 15 entrecroisées et une ceinture périphérique 17 entourant la couche périphérique 19 des crayons 3.

La grille 13 délimite des cellules 20 dont la plupart reçoivent chacune un crayon 3. Des bossages non-représentés sont prévus dans les plaquettes 15 pour fournir des appuis aux crayons 3 et les maintenir aux noeuds du réseau. Les autres cellules 20 reçoivent chacune un tube guide 11.

De manière classique également, les grilles de maintien 13 sont fixées aux tubes guides 11 et réparties sur la hauteur des crayons 3.

La retenue axiale des crayons 3 peut être assurée par une seule grille de maintien 13, par exemple la grille 13 supérieure, munie dans ce but de ressorts de poussée des crayons 3 contre des bossettes, découpées dans ses plaquettes 15 ou rapportées sur celles-ci.

Selon l'invention, l'assemblage 1 comprend, entre les grilles de maintien 13, des dispositifs intermédiaires 21 de renfort du squelette 5.

Pour les raisons exposées par la suite, ces dispositifs de renfort 21 ne sont pas visibles depuis l'extérieur de l'assemblage 1 et ont donc été représentées en pointillés sur la figure 1.

Dans l'exemple représenté, un dispositif intermédiaire de renfort 21 est prévu entre chaque paire de grilles de maintien 13.

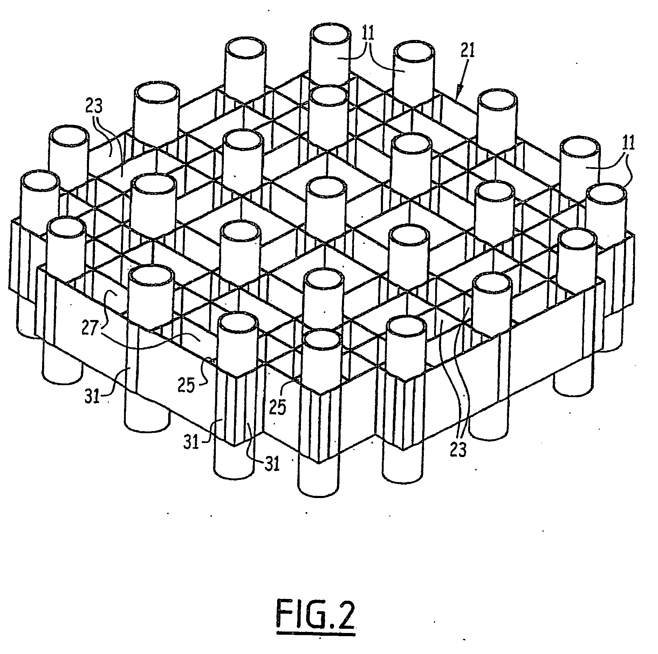

La structure des dispositifs intermédiaires de renfort 21 étant analogue, un seul dispositif 21 sera décrit en se référant aux figures 2 et 3. On notera que seuls des tronçons des tubes guides 11 ont été représentés sur la figure 2. Sur la figure 3, les tubes guides 11 et le dispositif intermédiaire de renfort 21 ont été représentés en trait fort.

Le dispositif 21 comprend deux jeux de plaquettes 23 entrecroisées et fixées les unes aux autres, par exemple par soudage à leurs points d'intersection. Les plaquettes 23 ont par exemple une épaisseur de l'ordre de 0,425mm et une hauteur comprise entre environ 18 et 28mm. Elles sont réalisées de préférence en alliage de zirconium.

Les plaquettes 23 délimitent entre elles des cellules 25 recevant chacune un tube guide 11 et des cellules 27 de réception des crayons 3. Comme on le voit sur la figure 3, certaines des cellules 27 sont des cellules individuelles et ne reçoivent qu'un crayon 3, tandis que d'autres reçoivent deux ou quatre crayons 3.

Les plaquettes 23 du dispositif intermédiaire de renfort 21 forment une structure maillée s'étendant uniquement entre les tubes guides 11. Cette structure maillée est donc aérée.

Ainsi, l'étendue transversale des plaquettes 23, et donc du dispositif de renfort 21, est limitée. Les plaquettes 23 ne s'étendent en particulier pas entre les crayons 3 de la couche périphérique extérieure 19 de crayons 3 ni entre cette couche 19 et la couche immédiatement adjacente 29 qui comprend, dans l'exemple représenté, 15 crayons par côté. En fait, le dispositif intermédiaire de renfort 21 s'arrête au voisinage de cette couche 29.

Les plaquettes 23 sont dépourvues de moyens de maintien des crayons 3 et les cellules 27 ont donc des dimensions supérieures à celles des crayons 3 et les entourent avec un jeu.

De plus, le dispositif intermédiaire de renfort 21 est dépourvu de moyens de mélange du fluide réfrigérant s'écoulant au travers de l'assemblage combustible 1, tels que des ailettes.

Le dispositif intermédiaire de renfort 21 est fixé aux tubes guides 11, par exemple par soudage de zones 31 (fig.2) légèrement bombées des plaquettes 23. Un tel soudage peut être pratiqué en haut et/ou en bas des plaquettes 23.

Dans une variante illustrée par la figure 4, les plaquettes 23 peuvent être soudées aux tubes guides 11 grâce à des pattes de soudage 33 qui font saillie par rapport aux plaquettes 23, par exemple vers le haut.

Si l'assemblage 1 comprend un tube d'instrumentation à la place du tube guide 11 central, les dispositifs intermédiaires de renfort 21 peuvent y être soudés.

Grâce à la présence des dispositifs intermédiaires de renfort 21, le squelette de support 5 et donc l'assemblage 1 sont plus rigides.

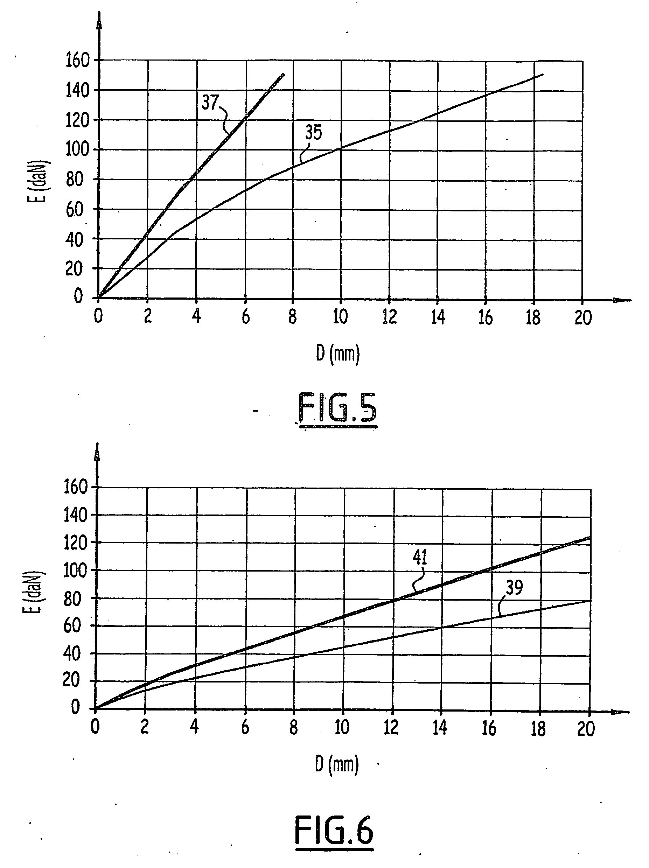

Cela est confirmé par la figure 5 qui illustre le résultat de simulations de déformations latérales d'assemblages de combustible nucléaire avant irradiation. Sur cette figure le déplacement latéral D en mm est porté en abscisse et l'effort nécessaire E en daN pour obtenir cette déformation est porté en ordonnée.

La courbe 35 correspond à un assemblage selon l'état de la technique issu de fabrication, c'est à dire avant irradiation. La courbe 37 correspond à l'assemblage 1 de la figure 1 issu de fabrication. Ainsi, la présence de dispositifs intermédiaires de renfort 21 permet d'augmenter la raideur ou rigidité latérale de l'assemblage 1 de l'ordre de 60% en début de vie par rapport à un assemblage classique.

La figure 6 correspond à des simulations analogues menées après irradiation. La courbe 39 correspond à un assemblage classique et la courbe 41 à l'assemblage 1 de la figure 1. L'augmentation de la rigidité latérale de l'assemblage 1 perdure donc après irradiation, cette augmentation étant toujours de l'ordre de 60%.

Ainsi, l'assemblage 1 a une raideur en fin de vie équivalente à celle d'un assemblage classique en début de vie. L'utilisation des dispositifs intermédiaires de renfort 21 pour renforcer le squelette de support 5 permet de compenser l'effet de l'irradiation.

En effet, on a découvert que la diminution de la rigidité après irradiation des assemblages classiques était due au fluage des tubes guides et aux modifications des conditions de support des crayons 3 par le squelette 5, si bien que les crayons 3 contribuaient à environ 65% de la rigidité d'un assemblage avant irradiation et ne contribuaient plus qu'à 40% environ de cette raideur après irradiation.

La rigidification du squelette de support 5 par les dispositifs intermédiaires de renfort 21 permet donc d'augmenter la raideur latérale y compris après irradiation. Pour autant, la structure aérée des dispositifs de renfort 21 qui en outre ont une étendue transversale réduite, limite les pertes de charge dans le fluide réfrigérant.

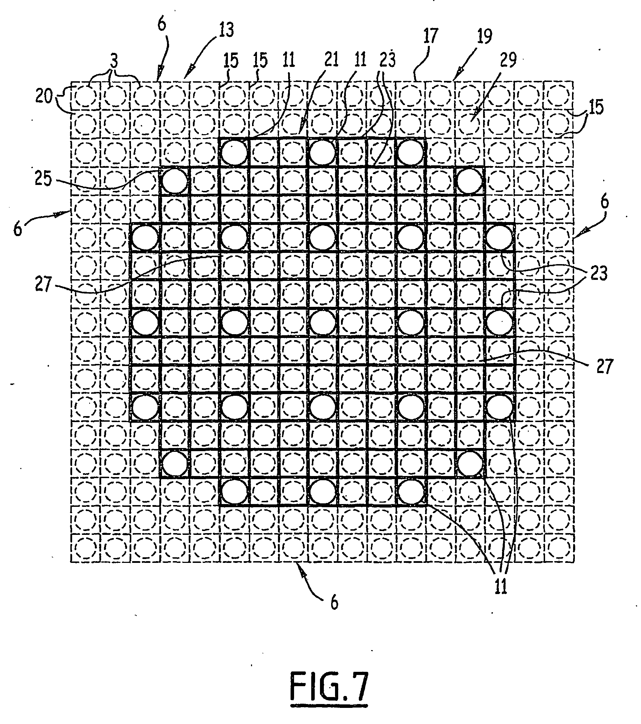

Selon une variante illustrée par la figure 7, le dispositif de renfort 21 peut former une structure maillée plus dense de sorte que toutes les cellules 27 sont des cellules individuelles ne recevant qu'un seul crayon 3.

Cette variante permet d'accroître encore la rigidité latérale de l'assemblage 1 mais augmente la perte de charge dans le fluide réfrigérant à la traversée de l'assemblage 1.

Selon encore une autre variante non représentée, le dispositif intermédiaire de renfort 21 peut s'étendre latéralement au-delà des tubes-guides 11, éventuellement jusqu'à la couche périphérique 19 des crayons 3 et comprendre en outre une ceinture extérieure. Ainsi, le dispositif 21 forme une structure maillée analogue à celle d'une grille de maintien 13. La ceinture extérieure permet d'améliorer la résistance de l'assemblage 1 aux chocs en manutention et en situation accidentelle. Dans l'exemple décrit ci-dessus, le nombre de plaquettes du dispositif 21 serait alors de 36.

De manière plus générale, les dispositifs intermédiaires de renfort 21 peuvent être fixés par d'autres moyens que des soudures aux tubes guides, par exemple par dudgeonnage, manchonnage, etc...

De même, l'assemblage 1, ne comporte pas nécessairement un dispositif intermédiaire de renfort 21 entre chaque paire de grilles de maintien 13.

Dans certaines variantes, les dispositifs intermédiaires de renfort 21 peuvent en outre comprendre des moyens de maintien des crayons 3.

Bien entendu, les dispositifs intermédiaires de renfort 21 peuvent être commercialisés seuls.

## Revendications

1. Assemblage de combustible nucléaire du type comprenant des crayons de combustible nucléaire (3) et un squelette de support (5) ayant deux embouts (7,9), des tubes guides (11) reliant les embouts, et des grilles (13) de maintien des crayons fixées aux tubes guides, l'assemblage comprenant en outre au moins un dispositif maillé (21) disposé entre deux grilles de maintien (13) et fixé à des tubes guides (11), **caractérisé en ce que** le dispositif maillé (21) est un dispositif de renfort du squelette de support (5), lequel dispositif maillé de renfort (21) est dépourvu de moyens de mélange d'un fluide réfrigérant destiné à s'écouler au travers de l'assemblage de combustible nucléaire (1).

2. Assemblage selon la revendication 1, dans lequel les crayons (3) de combustible nucléaire sont disposés en un réseau sensiblement régulier et le dispositif maillé de renfort (21) ne s'étend pas entre les crayons (3) périphériques.

3. Assemblage selon la revendication 2, dans lequel le dispositif maillé de renfort (21) ne s'étend pas entre la couche (19) de crayons périphériques et la couche adjacente (29) de crayons.

4. Assemblage selon l'une des revendications précédentes, dans lequel le dispositif maillé de renfort (21) est dépourvu de moyens de maintien des crayons de combustible nucléaire (3).

5. Assemblage selon l'une des revendications précédentes, dans lequel le dispositif maillé de renfort (21) comprend deux jeux de plaquettes (23) entrecroisées et fixées mutuellement, les plaquettes délimitant entre elles des cellules (25) de réception des tubes guides et des cellules (27) de réception des crayons de combustible nucléaire.

6. Assemblage selon les revendications 4 et 5 prises ensembles, dans lequel les cellules (27) de réception des crayons de combustible nucléaire (3) ont des dimensions supérieures à celles des crayons (3) pour les recevoir avec un jeu.

7. Utilisation, dans un assemblage (1) de combustible nucléaire comprenant des crayons (3) de combustible nucléaire et un squelette de support (5) ayant :
- deux embouts (7, 9),
- des tubes guides (11) reliant les embouts, et
- des grilles (13) de maintien des crayons,
d'au moins un dispositif maillé de renfort (21) pour renforcer le squelette de support (5), ce dispositif maillé (21) étant disposé entre deux grilles de maintien (13) et étant fixé à des tubes guides (11), le dispositif maillé de renfort (21) étant dépourvu de moyens de mélange d'un fluide réfrigérant destiné à s'écouler au travers de l'assemblage de combustible nucléaire (1).

8. Utilisation selon la revendication 7, dans laquelle les crayons (3) de combustible nucléaire sont disposés en un réseau sensiblement régulier et le dispositif maillé de renfort (21) ne s'étend pas entre les crayons (3) périphériques.

9. Utilisation selon la revendication 8, dans laquelle le dispositif maillé de renfort (21) ne s'étend pas entre la couche (19) de crayons périphériques et la couche adjacente (29) de crayons.

10. Utilisation selon l'une des revendications 7 à 9, dans laquelle le dispositif maillé de renfort (21) est dépourvu de moyens de maintien des crayons de combustible nucléaire.

11. Utilisation selon l'une des revendications 7 à 10, dans laquelle le dispositif maillé de renfort (21) comprend deux jeux de plaquettes (23) entrecroisées et fixées mutuellement, les plaquettes délimitant entre elles des cellules (25) de réception des tubes guides (11) et des cellules (27) de réception des crayons de combustible nucléaire (3).

12. Utilisation selon les revendications 10 et 11 prises ensembles, dans laquelle les cellules (27) de réception des crayons de combustible nucléaire (3) ont des dimensions supérieures à celles des crayons (3) pour les recevoir avec un jeu.

## Patentansprüche

1. Nuklearbrennstoff-Einrichtung des Typs aufweisend Nuklearbrennstoff-Stäbe (3) und ein Stützgerüst (5), das zwei Ansatzstücke (7, 9), Führungsrohre (11), die die Ansatzstücke verbinden, und Gitter (13), die an den Führungsrohren fixiert sind, zum Halten der Stäbe hat, wobei die Einrichtung ferner aufweist wenigstens eine Maschenvorrichtung (21), die zwischen zwei Gittern zum Halten (13) angeordnet ist und an den Führungsrohren (11) fixiert ist, **dadurch gekennzeichnet, dass** die Maschenvorrichtung (21) eine Verstärkungs-Vorrichtung des Stützgerüsts (5) ist, wobei die Verstärkungs-Maschenvorrichtung (21) mit Mitteln zum Mischen eines Kältemittelfluids versehen ist, das dazu vorgesehen ist, durch die Nuklearbrennstoff-Einrichtung (1) hindurch zu strömen.

2. Einrichtung gemäß Anspruch 1, wobei die Nuklearbrennstoff-Stäbe (3) in einem im Wesentlichen regulären Netz angeordnet sind, und wobei sich die Verstärkungs-Maschenvorrichtung (21) nicht zwischen den peripheren Stäben (3) erstreckt.

3. Einrichtung gemäß Anspruch 2, wobei die Verstärkungs-Maschenvorrichtung (21) sich nicht zwischen der Schicht (19) peripherer Stäbe und der benachbarten Schicht (29) Stäbe erstreckt.

4. Einrichtung gemäß einem der vorhergehenden Ansprüche, wobei die Verstärkungs-Maschenvorrichtung (21) mit Mitteln zum Halten der Nuklearbrennstoff-Stäbe (3) versehen ist.

5. Einrichtung gemäß einem der vorhergehenden Ansprüche, wobei die Verstärkungs-Maschenvorrichtung (21) zwei Sätze von Platten (23) aufweist, die sich kreuzen und aneinander fixiert sind, wobei die Platten zwischen sich Zellen (25) zur Aufnahme der Führungsrohre und Zellen (27) zur Aufnahme der Nuklearbrennstoff-Stäbe begrenzen.

6. Einrichtung gemäß den Ansprüchen 4 und 5 zusammengenommen, wobei die Zellen (27) zur Aufnahme der Nuklearbrennstoff-Stäbe (3) Abmessungen haben, die größer sind als jene der Stäbe (3), um diese mit einem Spiel aufzunehmen.

7. Verwendung, in einer Nuklearbrennstoff-Einrichtung (1), die Nuklearbrennstoff-Stäbe (3) und ein Stützgerüst (5) aufweist, welches aufweist:
- zwei Ansatzstücke (7, 9),
- Führungsrohre (11), die die Ansatzstücke verbinden, und
- Gitter (13) zum Halten der Stäbe,
von wenigstens einer Verstärkungs-Maschenvorrichtung (21) zum Verstärken des Stützgerüsts (5), wobei diese Maschenvorrichtung (21) zwischen zwei Gittern zum Halten (13) angeordnet ist und an den Führungsrohren (11) fixiert ist, wobei die Verstärkungs-Maschenvorrichtung (21) mit Mitteln zum Mischen eines Kältemittelfluids versehen ist, das dazu vorgesehen ist, durch die Nuklearbrennstoff-Einrichtung (1) hindurch zu strömen.

8. Verwendung gemäß Anspruch 7, wobei die Nuklearbrennstoff-Stäbe (3) in einem im Wesentlichen regulären Netz angeordnet sind, und wobei sich die Verstärkungs-Maschenvorrichtung (21) nicht zwischen den peripheren Stäben (3) erstreckt.

9. Verwendung gemäß Anspruch 8, wobei die Verstärkungs-Maschenvorrichtung (21) sich nicht zwischen der Schicht (19) peripherer Stäbe und der benachbarten Schicht (29) Stäbe erstreckt.

10. Verwendung gemäß einem der Ansprüche 7 bis 9, wobei die Verstärkungs-Maschenvorrichtung (21) mit Mitteln zum Halten der Nuklearbrennstoff-Stäbe (3) versehen ist.

11. Verwendung gemäß einem der Ansprüche 7 bis 10, wobei die Verstärkungs-Maschenvorrichtung (21) zwei Sätze von Platten (23) aufweist, die sich kreuzen und aneinander fixiert sind, wobei die Platten zwischen sich Zellen (25) zur Aufnahme der Führungsrohre und Zellen (27) zur Aufnahme der Nuklearbrennstoff-Stäbe (3) begrenzen.

12. Verwendung gemäß den Ansprüchen 10 und 11 zusammengenommen, wobei die Zellen (27) zur Aufnahme der Nuklearbrennstoff-Stäbe (3) Abmessungen haben, die größer sind als jene der Stäbe (3), um diese mit einem Spiel aufzunehmen.

## Claims

1. Nuclear fuel assembly of the type comprising nuclear fuel rods (3) and a supporting skeleton (5) having two nozzles (7, 9), guide tubes (11) interconnecting the nozzles, and grids (13) for holding the rods, which holding grids are secured to the guide tubes, the assembly further comprising at least one lattice device (21) disposed between two holding grids (13) and secured to the guide tubes (11), **characterized in that** the lattice device (21) is a device for reinforcing the support skeleton (5), wherein the lattice reinforcing device (21) does not have means for mixing a cooling fluid that is intended to flow through the nuclear fuel assembly (1).

2. Assembly according to claim 1, wherein the nuclear fuel rods (3) are disposed in a substantially regular array and the lattice reinforcing device (21) does not extend between the peripheral rods (3).

3. Assembly according to claim 2, wherein the lattice reinforcing device (21) does not extend between the peripheral layer (19) of rods and the adjacent layer (29) of rods.

4. Assembly according to any one of the preceding claims, wherein the lattice reinforcing device (21) does not have means for holding the nuclear fuel rods (3).

5. Assembly according to any one of preceding claims, wherein the lattice reinforcing device (21) comprises two sets of crossed plates (23) that are secured to one another, the plates defining between them cells (25) for receiving the guide tubes and cells (27) for receiving the nuclear fuel rods.

6. Assembly according to claims 4 and 5 taken together, wherein the cells (27) for receiving nuclear fuel rods (3) are of dimensions greater than the dimensions of the rods (3) so as to receive them with clearance.

7. Use, in a nuclear fuel assembly (1) comprising nuclear fuel rods (3) and a support skeleton (5), the assembly having:
• two nozzles (7, 9),
• guide tubes (11) interconnecting the nozzles, and
• grids (13) for holding the rods,
of at least one lattice reinforcing device (21) for reinforcing the support skeleton (5), the lattice reinforcing device (21) being disposed between two holding grids (13) and being secured to the guide tubes (11), wherein the lattice reinforcing device (21) does not have means for mixing a cooling fluid that is intended to flow through the nuclear fuel assembly (1).

8. Use according to claim 7, wherein the nuclear fuel rods (3) are disposed in a substantially regular array and the lattice reinforcing device (21) does not extend between the peripheral rods (3).

9. Use according to claim 8, wherein the lattice reinforcing device (21) does not extend between the peripheral layer (19) of rods and the adjacent layer (29) of rods.

10. Use according to any one of claims 7 to 9, wherein the lattice reinforcing device (21) does not have means for holding nuclear fuel rods.

11. Use according to any one of claims 7 to 10, wherein the lattice reinforcing device (21) comprises two sets of crossed plates (23) that are secured to one another, the plates defining between them cells (25) for receiving guide tubes (11) and cells (27) for receiving nuclear fuel rods (3).

12. Use according to claims 10 and 11 taken together, wherein the cells (27) for receiving nuclear fuel rods (3) are of dimensions greater than those of the rods (3) so as to receive them with clearance.
